# EUROPÄISCHE PATENTSCHRIFT

(11) **EP 0 838 182 B1**
(45) Veröffentlichungstag und Bekanntmachung des Hinweises auf die Patenterteilung: **14.12.2005**
(21) Anmeldenummer: 97116042.9
(22) Anmeldetag: 16.09.1997
(51) Int. Cl.: A47G 1/17

(54) **Verfahren zur Ablösung eines wiederablösbaren, selbstklebenden Hakens**
Method for removing an adhesive hook
Procédé pour enlever un crochet adhésif

(30) Priorität: 05.10.1996 DE 19641118
(43) Veröffentlichungstag der Anmeldung: 29.04.1998
(73) Patentinhaber: tesa AG, 20253 Hamburg (DE)
(72) Erfinder: Schumann, Jörn, 21465 Reinbek (DE)

(56) Entgegenhaltungen:
- EP-A- 0 590 391
- EP-A- 0 878 526
- WO-A-95/06691
- DE-A- 19 542 212

## Beschreibung

Die Erfindung betrifft ein Verfahren zur Ablösung eines selbstklebenden, wiederablösbaren Hakens oder einer vergleichbaren Befestigungsvorrichtung, die ohne jeglichen Rückstand oder Beschädigung wieder vom Untergrund gelöst werden kann.

Im Handel sind seit längerer Zeit Haken bekannt, die mit doppelseitigen Schaumstoffklebebändern am Untergrund fixiert werden. Eine spätere Ablösung ist dann nur sehr schwer möglich, zumeist muß dafür der Haken zerstört werden. Weiterhin verbleiben Rückstände des Klebebands am Untergrund.

Selbstklebende Haken oder vergleichbare Vorrichtungen sind u. a. aus der deutschen Patentschrift DE 42 33 872 bekannt. In dieser wird ein Haken beschrieben, der mittels eines Streifens einer Klebfolie auf dem Untergrund verklebt wird, wobei der Klebfolienstreifen einen nichtklebenden Anfasser aufweist. Um den Haken wieder vom Untergrund zu lösen, wird der Klebfolienstreifen in der Verklebungsebene am Anfasser durch Zug gestreckt, worauf es zur Entklebung kommt. Damit der Haken wieder vom Untergrund gelöst werden kann, ist es zwingend notwendig, daß der Klebfolienstreifen so unter dem Haken verklebt wird, daß der Anfasser sichtbar ist.
Dieser stets sichtbare Anfasser trübt naturgemäß den optischen Eindruck des verklebten Hakens, beinhaltet aber auch technische Nachteile. Denn der Anfasser ist äußeren Belastungen schutzlos ausgeliefert. Erhöhte UV-Strahlung oder auch Lösungsmittel führen zu einer Beeinträchtigung der Stabilität des Anfassers, leicht reißt dieser dann beim Ablösen unter der Zugeinwirkung ab. Eine Trennung des Hakens vom Untergrund ist dann nur noch unter Zerstörung des Untergrunds oder des Hakens möglich.

Auch solche Haken sind bereits im Handel erhältlich, und zwar unter dem Namen "tesa Power-Strips mit Haken" ®.

Einen vergleichbaren Haken offenbart die PCT-Anmeldung WO 94/21157. Der in dieser gezeigte Haken verwendet eine Klebfolie, die hochelastisch und des weiteren nicht rückstellend ist.

Aus der WO 95/06691 A1 ist ein weiterer Haken bekannt, der mit einem Klebestreifen auf dem Untergrund verklebt wird. Der Ablösevorgang erfolgt, indem der Klebestreifen mittels Ziehen gestreckt und dabei gleichzeitig sowohl vom Haken als auch vom Untergrund entfernt wird.

Weiterhin sind im Handel die sogenannten "tesa Power-Strips Systemhaken" ® erhältlich. Zum Anbringen dieser auf dem Untergrund wird zunächst eine Basisplatte mittels eines Streifens der erwähnten Klebfolie verklebt, wobei wieder der Anfasser sichtbar bleiben muß.
Auf die Basisplatte wird dann der jeweilige Haken aufgesteckt. Dieser Haken weist aber eine relativ aufwendige Art der Verklebung auf, des weiteren ist er in der Herstellung schon durch die Anzahl von zwei Teilen aufwendig und somit teuer.

Allen genannten Systemen gemeinsam haften aber auch praktische Nachteile an, die die Verwendung derselben einschränken können. So bedarf der Vorgang der sachgemäßen Verklebung für den Verbraucher einer Erklärung. Denn versäumt es der Verbraucher, den Haken derartig zu verkleben, dass der Anfasser der Klebfolie sichtbar ist, ist eine spätere Trennung des Hakens vom Untergrund nicht mehr möglich. Denn die Loslösung des Hakens bzw. der genannten Basisplatte erfolgt ja, indem am Anfasser parallel zur Verklebungsebene gezogen wird. Durch die daraus resultierende Dehnung der Klebfolie kommt es zur Reduzierung der Klebkraft, die Klebfolie löst sich rückstandslos vom Untergrund, aber auch vom Haken ab.
Bei fehlerhafter Anwendung der Klebfolie kann die gewünschte Trennung nur durch Anwendung entsprechender Gewalt erfolgen. Dies führt aber auf jeden Fall zur Zerstörung des Hakens, darüber hinaus kann auch noch der Untergrund beschädigt werden.

Schließlich bedingt die besondere Art der Verklebung, dass herkömmlichen Haken an vielen Stellen nicht verwendet werden können, weil keine Möglichkeit besteht, den Anfasser in Richtung der Verklebungsebene zu ziehen. Die Verwendung wird noch weiter eingeschränkt durch die Tatsache, dass es an einigen Orten nicht möglich ist, den Anfasser überhaupt frei zugänglich zu haben, so zum Beispiel an Kanten oder Absätzen.

Aufgabe der Erfindung war es somit, ein Verfahren zur Ablösung eines selbstklebenden, wiederablösbaren Hakens oder einer dergleichen Befestigungsvorrichtung zur Verfügung zu stellen, das die genannten Nachteile nicht aufweist.

Gelöst wird diese Aufgabe durch ein Verfahren zur Ablösung eines selbstklebenden, wiederablösbaren Hakens oder einer dergleichen Befestigungsvorrichtung, wie es in dem Patentanspruch 1 beschrieben ist. Weiterreichende Ausführungsformen sind Gegenstand der Unteransprüche.

Demgemäß betrifft die Erfindung ein Verfahren zur Ablösung eines wiederablösbaren, selbstklebenden Hakens oder einer dergleichen Befestigungsvorrichtung mit einer Grundplatte sowie mit einem Streifen einer beidseitig klebenden Klebfolie. Die Klebfolie zeichnet sich dadurch aus, daß die mit ihr erzielte Verklebung durch streckendes Ziehen wieder lösbar ist.
Auf der vorderen Seite der Klebfolie wird die Grundplatte der Befestigungsvorrichtung getragen, und zwar vorzugsweise derartig, daß die vordere Seite des Streifens vollständig von der Grundplatte verdeckt ist, die hintere Seite der Klebfolie ist mit einem Trennlaminat eingedeckt, beispielsweise einer Trennfolie oder einem silikonisierten Trennpapier. Nach Entfernen des Trennlaminats wird die hintere Seite des Streifens auf einem Untergrund verklebt.

Die Trennung der verklebten Grundplatte samt des Streifens vom Untergrund erfolgt durch Drehen der Befestigungsvorrichtung im wesentlichen in der Verklebungsebene.

Die Grundplatte eine Dicke kann eine Dicke von weniger als 5 mm aufweisen. Weiterhin kann die Grundplatte mit zumindest einer Nut und/oder zumindest einer Bohrung versehen sein.
Diese genannten Arten der Ausführung der Grundplatten bedingt, daß das notwendige Drehmoment zum Lösen der Grundplatte und somit der Befestigungsvorrichtung nur mittels eines entsprechend geformten Schlüssels möglich ist. Dieser Schlüssel umfaßt die Grundplatte ähnlich wie ein bekannter Maulschlüssel eine Sechskantmutter. Oder der Schlüssel ist so geformt, daß er mit Zapfen in die Nuten beziehungsweise Bohrungen der Grundplatte greift.

Um die Grundplatte möglichst optimal auszunutzen, kann der Streifen weitgehend wie die Grundplatte geformt sein. Somit wird auf relativ kleiner Fläche eine hohe Haltekraft erzeugt.

Die Klebfolie ist mit oder ohne Zwischenträger elastisch oder plastisch dehnbar, die Klebfolie ist weiterhin vorzugsweise eine solche auf Basis von thermoplastischem Kautschuk und klebrigmachenden Harzen, mit hoher Elastizität und geringer Plastizität.

Die Adhäsion der Klebfolie ist vorteilhafterweise geringer als die Kohäsion, das Haftvermögen beim Dehnen der Folie verschwindet weitgehend, und das Verhältnis von Abzugskraft zu Reißlast ist mindestens 1 : 1,5.

Die Befestigungsvorrichtung besteht vorzugsweise aus Kunststoff oder Metall, so eignen sich insbesondere Polyethylenterephthalat, Polystyrol und ABS.

Ein erfindungsgemäßes Verfahren ist hervorragend geeignet, die Nachteile der bisher bekannten Systeme zu vermeiden. Durch das Drehen des Hakens zur Loslösung vom Untergrund ist es nicht mehr notwendig, daß die Klebfolie derartig verklebt wird, daß ein Anfasser sichtbar bleibt. Darüber hinaus benötigt die Klebfolie überhaupt keinen Anfasser mehr.
Damit ist ein Abreißen des Anfassers während der Zugbelastung ausgeschlossen.
Weiterhin ist der Verwender problemlos in der Lage, einen Haken auch in schwierigen Anwendungsfällen sachgerecht zu verkleben, weil er diese Art der Verklebung auch von den ganz einfachen, lange bekannten Haken kennt.

Weiterhin kann ein Haken durch die besondere Art der erfindungsgemäßen Ablösung auch an Stellen verklebt werden, die bisher den herkömmlichen Haken nicht zugänglich waren, weil aus Platzmangel das notwendige Ziehen am Anfasser nicht möglich ist.

Zum Lösen des verklebten Hakens wird der dementsprechend stabil ausgebildete Haken selbst gedreht. Alternativ kann auch die Grundplatte des Hakens genommen und um einen ausreichend großen Winkel bewegt werden. Vorteilhafterweise hat zu diesem Zweck die Grundplatte eine Dicke von zumindest 5 mm.

Je nach Größe und Art des Klebfolienstreifens und der Grundplatte sowie des Untergrunds, auf dem der Haken verklebt wird, können unterschiedliche Belastungsgrenzen des Hakens erreicht werden. Der Untergrund muß eben, fest und trocken sein, direkt vor dem Verkleben empfiehlt sich auch noch eine sorgfältige Reinigung, um das dauerhafte und zuverlässige Verkleben des Hakens zu gewährleisten.

In einer besonderen Ausführung der Grundplatte des Hakens kann ein weiteres, bisher nicht gelöstes Problem vermieden werden. Die herkömmlichen Systeme zeichnen sich dadurch aus, daß der Haken jederzeit rückstandsfrei entfernt werden kann, allerdings damit auch von jedermann. Insbesondere bei Verklebung derartiger Haken in Räumen mit wechselndem Publikumsverkehr, zum Beispiel in Hotelzimmern, Restaurants oder Verbrauchermärkten, besteht die Gefahr, daß die ja wiederverwendbaren Haken unbefugt entfernt werden. Wenn die Grundplatte eine sehr geringe Dicke hat oder insgesamt nur ein kleine Fläche bedeckt, kann der jeweilige Anwender die Grundplatte und damit die gesamte Befestigungsvorrichtung nicht mehr mit der Hand, sondern nur unter Verwendung eines Werkzeugs lösen. Als Werkzeug ist der Einsatz eines beschriebenen Schlüssels möglich.

Bei einer kreisförmigen Grundplatte kann in der Grundplatte eine Nut vorgesehen sein, in die der spezielle Schlüssel greift, der einen entsprechend geformten Zapfen aufweist. Weiterhin kann in der Grundplatte zumindest eine Aussparung, zum Beispiel eine Bohrung, vorgesehen sein, in die der Schlüssel mit der entsprechenden Anzahl von Zapfen greift.
Die Erfindung ist aber nicht auf die genannten Möglichkeiten beschränkt, vielmehr liegen auch andere Ausgestaltungsmöglichkeiten eines Schlüssels innerhalb des Verfahrens der Erfindung.

Nach der Trennung des Hakens samt der Klebfolie vom Untergrund wird die Klebfolie selbst vom Haken getrennt, indem die Klebfolie einfach in Richtung der Verklebungsebene abgezogen wird vom Haken.

Der Haken ist somit stets wiederverwendbar.

Im folgenden soll anhand eines Beispiels die Erfindung näher erläutert werden, ohne in irgendeiner Form einschränkend wirken zu sollen.

### Beispiel 1

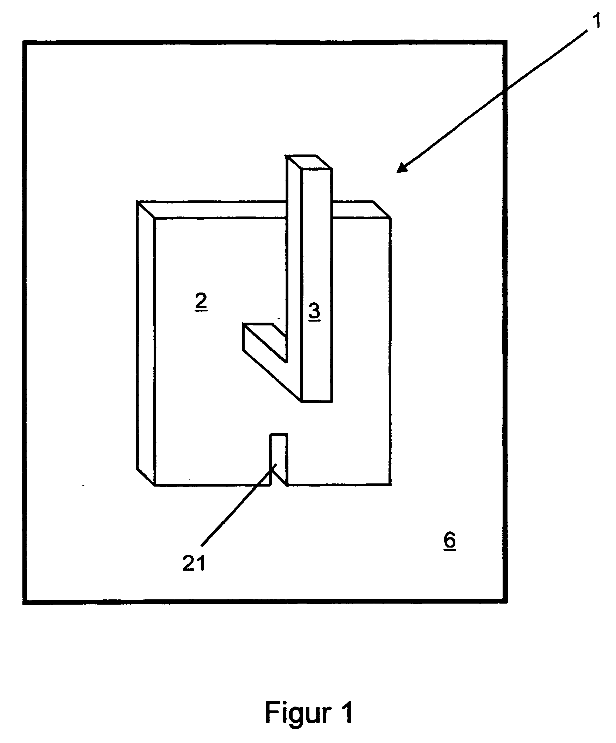

Es zeigen
- die Figur 1: einen Haken 1, verklebt auf einer Kachel 6, und

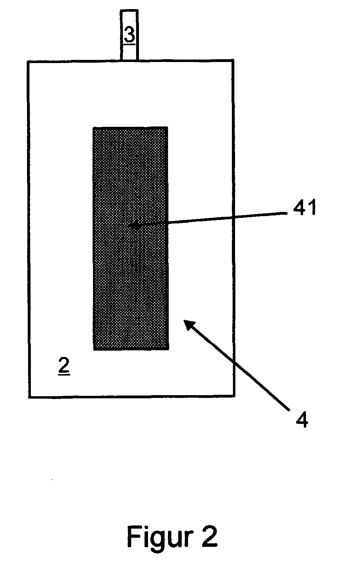

- die Figur 2: die Rückseite der Grundplatte 2 des Hakens 1, auf dem ein Streifen 4 der Klebfolie verklebt ist, wobei der Streifen 4 noch mit einer Trennfolie 41 eingedeckt ist.

Auf diesen Haken 1 mit seiner rechteckigen Grundplatte 2 der Abmessung 20 mm x 20 mm, die auf ihrer vorderen Seite eine stiftförmige Verlängerung 3 aufweist, wird zunächst ein Streifen 4 einer Klebfolie der folgenden Zusammensetzung und Größe verklebt.
Der gesamte Haken 1 besteht aus ABS.

Die Klebfolie 4 besteht aus einem Gemisch von 50 Teilen SIS-Dreiblockpolymer mit einem Blockpolystyrolgehalt von 29 Gew.-% (Vector 4211, Dexco), 50 Teilen eines Penta-Esters von teilhydriertem Kolophonium (Pentalyn H-E, Hercules) und 1 Teil eines phenolischen Alterungsschutzmittels. Diese Masse wird in einer Schichtstärke von 600 µm auf ein dopelseitig silikonisiertes Trennpapier extrudiert, und das Laminat aus Klebemasse und Trennpapier zu 50 mm breiten Mutterrollen gewickelt.
Daraufhin wird die Klebefolie 4 beidseitig mit einer 30 µm starken, silikonisierten Polypropylenfolie eingedeckt.
Im nächsten Arbeitsschritt werden Streifen 4 der Abmaße 15 mm x 15 mm mittels einer Hubstanze gestanzt.

Die Verklebung des Hakens 1 mit der Klebfolie 4 erfolgt dabei derartig, daß der gesamte Streifen 4 von der Grundplatte 2 abgedeckt ist.

Der nun mit der Klebfolie 4 eingedeckte Haken 1 wird auf eine trockene, ebene und saubere Kachel 6 aufgeklebt, indem zunächst die auf der hinteren Seite der Klebfolie 4 befindliche Trennfolie 41 abgezogen wird, dann der Haken 1 mit der Klebfolie 4 für fünf Sekunden fest gegen die Kachel 6 gepreßt wird.

Auf diese Weise ist der Haken 1 fest verankert und kann nunmehr Gewichte bis zu einem halben Kilogramm tragen.

Zur Ablösung des Hakens 1 wird die Grundplatte 2 beiderseits fest genommen und im Uhrzeigersinn in der Verklebungsebene gedreht. Dadurch löst sich die Klebfolie 4 von der Kachel 6, ohne irgendwelche Rückstände zu belassen oder Beschädigungen hervorzurufen.

Alternativ kann das Lösen erfolgen, indem ein Schlüssel mit einem entsprechend geformten Zapfen in die Nut 21 in der Grundplatte 2 des Hakens 1 greift und gleichzeitig ähnlich einem allgemein bekannten Maulschlüssel zwei Seiten der Grundplatte 2 eng umfaßt. Dieser Schlüssel kann das zum Lösen des Hakens 1 notwendige Drehmoment hervorragend übertragen.

Abschließend wird die Klebfolie 4 von der Grundplatte 2 entfernt, indem die Klebfolie 4 in Richtung der Verklebungsebene abgezogen wird.

Der Haken 1 kann danach wieder ohne Einschränkungen verklebt werden.

## Patentansprüche

1. Verfahren zur Ablösung eines wiederablösbaren, selbstklebenden Hakens oder einer dergleichen Befestigungsvorrichtung mit einer Grundplatte, und mit einem Streifen einer beidseitig klebenden Klebfolie, die eine solche ist, dass die mit ihr erzielte Verklebung durch streckendes Ziehen wieder lösbar ist,
wobei die Klebefolie auf ihrer vorderen Seite die Grundplatte trägt und mit der hinteren Seite auf einem Untergrund verklebt ist, und wobei die Trennung der verklebten Grundplatte der Befestigungsvorrichtung samt des Streifens vom Untergrund durch Drehen der Grundplatte im wesentlichen in der Verklebungsebene erfolgt.

2. Verfahren zur Ablösung eines wiederablösbaren, selbstklebenden Hakens oder einer dergleichen Befestigungsvorrichtung nach Anspruch 1, **dadurch gekennzeichnet, dass** die vordere Seite des Streifens vollständig von der Grundplatte verdeckt ist.

3. Verfahren zur Ablösung eines wiederablösbaren, selbstklebenden Hakens oder einer dergleichen Befestigungsvorrichtung nach Anspruch 1, **dadurch gekennzeichnet, dass** die Grundplatte eine Dicke von weniger als 5 mm aufweist.

4. Verfahren zur Ablösung eines wiederablösbaren, selbstklebenden Hakens oder einer dergleichen Befestigungsvorrichtung nach Anspruch 1, **dadurch gekennzeichnet, dass** die Grundplatte mit zumindest einer Nut und/oder zumindest einer Bohrung versehen ist.

5. Verfahren zur Ablösung eines wiederablösbaren, selbstklebenden Hakens oder einer dergleichen Befestigungsvorrichtung nach Anspruch 1, **dadurch gekennzeichnet, dass** der Streifen weitgehend die gleiche Form wie die Grundplatte aufweist.

6. Verfahren zur Ablösung eines wiederablösbaren, selbstklebenden Hakens oder einer dergleichen Befestigungsvorrichtung nach Anspruch 1, **dadurch gekennzeichnet, dass** die Klebfolie einen Zwischenträger aufweist.

7. Verfahren zur Ablösung eines wiederablösbaren, selbstklebenden Hakens oder einer dergleichen Befestigungsvorrichtung nach Anspruch 1, **dadurch gekennzeichnet, dass** die Adhäsion der Klebfolie geringer ist als die Kohäsion, das Haftvermögen beim Dehnen der Folie weitgehend verschwindet, und das Verhältnis von Abzugskraft zu Reißlast mindestens 1 : 1,5 ist.

8. Verfahren zur Ablösung eines wiederablösbaren, selbstklebenden Hakens oder einer dergleichen Befestigungsvorrichtung nach Anspruch 1, **dadurch gekennzeichnet, dass** die Klebfolie eine solche auf Basis von thermoplastischem Kautschuk und klebrigmachenden Harzen ist, mit hoher Elastizität und geringer Plastizität.

9. Verfahren zur Ablösung eines wiederablösbaren, selbstklebenden Hakens oder einer dergleichen Befestigungsvorrichtung nach Anspruch 1, **dadurch gekennzeichnet, dass** die hintere Seite des Streifens vor der Verklebung auf dem Untergrund mit einem Trennlaminat eingedeckt ist.

10. Verfahren zur Ablösung eines wiederablösbaren, selbstklebenden Hakens oder einer dergleichen Befestigungsvorrichtung nach Anspruch 1, **dadurch gekennzeichnet, dass** die Befestigungsvorrichtung und/oder die Grundplatte aus Kunststoff oder Metall besteht.

## Claims

1. Method of detaching a redetachable, self-adhesive hook or a similar fixing device having a baseplate, and having a strip of a double-sided adhesive film which is such that the bond obtained with it can be separated again by pulling on it so as to stretch it, the film carrying on its front face the baseplate and with its rear face being bonded to a substrate, and the separation of the bonded baseplate of the fixing device together with the strip from the substrate taking place by rotation of the baseplate essentially in the plane of the bond.

2. Method of detaching a redetachable, self-adhesive hook or a similar fixing device according to Claim 1, **characterized in that** the front face of the strip is covered completely by the baseplate.

3. Method of detaching a redetachable, self-adhesive hook or a similar fixing device according to Claim 1, **characterized in that** the baseplate has a thickness of less than 5 mm.

4. Method of detaching a redetachable, self-adhesive hook or a similar fixing device according to Claim 1, **characterized in that** the baseplate is provided with at least one groove and/or at least one bore.

5. Method of detaching a redetachable, self-adhesive hook or a similar fixing device according to Claim 1, **characterized in that** the strip has substantially the same shape as the baseplate.

6. Method of detaching a redetachable, self-adhesive hook or a similar fixing device according to Claim 1, **characterized in that** the adhesive film has an intermediate backing.

7. Method of detaching a redetachable, self-adhesive hook or a similar fixing device according to Claim 1, **characterized in that** the adhesion of the adhesive film is less than the cohesion, the adhesion largely disappears when the film is extended, and the ratio of peel force to tear load is at least 1 : 1.5

8. Method of detaching a redetachable, self-adhesive hook or a similar fixing device according to Claim 1, **characterized in that** the adhesive film is based on thermoplastic rubber and tackifying resins, being of high elasticity and low plasticity.

9. Method of detaching a redetachable, self-adhesive hook or a similar fixing device according to Claim 1, **characterized in that** the rear face of the strip is covered with a release laminate before bonding to the substrate.

10. Method of detaching a redetachable, self-adhesive hook or a similar fixing device according to Claim 1, **characterized in that** the fixing device and/or the baseplate consists of plastic or metal.

## Revendications

1. Procédé de libération d'un crochet autoadhésif et apte à être de nouveau libéré ou d'un dispositif de fixation similaire qui présente une plaque de base et un ruban de film adhésif double face qui est tel que le collage établi avec celui-ci peut de nouveau être libéré en l'étirant par traction, dans lequel le film adhésif porte la plaque de base sur son côté avant et est collé sur une base par son côté arrière et dans lequel on sépare de la base la plaque de base collée du dispositif de fixation en même temps que le ruban en tournant la plaque de base essentiellement dans le plan de collage.

2. Procédé de libération d'un crochet autoadhésif et apte à être à nouveau libéré ou d'un dispositif de fixation similaire selon la revendication 1, **caractérisé en ce que** le côté avant du ruban est entièrement recouvert par la plaque de base.

3. Procédé de libération d'un crochet autoadhésif et apte à être à nouveau libéré ou d'un dispositif de fixation similaire selon la revendication 1, **caractérisé en ce que** l'épaisseur de la plaque de base est inférieure à 5 mm.

4. Procédé de libération d'un crochet autoadhésif et apte à être à nouveau libéré ou d'un dispositif de fixation similaire selon la revendication 1, **caractérisé en ce que** la plaque de base est dotée d'au moins une rainure et/ou d'au moins une perforation.

5. Procédé de libération d'un crochet autoadhésif et apte à être à nouveau libéré ou d'un dispositif de fixation similaire selon la revendication 1, **caractérisé en ce que** le ruban présente largement la même forme que la plaque de base.

6. Procédé de libération d'un crochet autoadhésif et apte à être à nouveau libéré ou d'un dispositif de fixation similaire selon la revendication 1, **caractérisé en ce que** le film adhésif est doté d'un support intermédiaire.

7. Procédé de libération d'un crochet autoadhésif et apte à être à nouveau libéré ou d'un dispositif de fixation similaire selon la revendication 1, **caractérisé en ce que** l'adhérence du film adhésif est plus faible que sa cohésion, la capacité d'adhérence disparaissant largement lorsqu'on étire le film et le rapport entre la résistance au décollement et la charge de rupture étant d'au moins 1:1,5.

8. Procédé de libération d'un crochet autoadhésif et apte à être à nouveau libéré ou d'un dispositif de fixation similaire selon la revendication 1, **caractérisé en ce que** le film adhésif est réalisé à base de caoutchouc thermoplastique et de résines d'adhérence et présente une élasticité élevée et une faible plasticité.

9. Procédé de libération d'un crochet autoadhésif et apte à être à nouveau libéré ou d'un dispositif de fixation similaire selon la revendication 1, **caractérisé en ce que** le côté arrière du ruban est recouvert d'un stratifié antiadhésif avant d'être collé sur la base.

10. Procédé de libération d'un crochet autoadhésif et apte à être à nouveau libéré ou d'un dispositif de fixation similaire selon la revendication 1, **caractérisé en ce que** le dispositif de fixation et/ou la plaque de base sont constitués de matière synthétique ou de métal.
